# EUROPEAN PATENT SPECIFICATION

(11) **EP 0 800 771 B1**
(45) Date of publication and mention of the grant of the patent: **09.01.2002**
(21) Application number: 97105400.2
(22) Date of filing: 01.04.1997
(51) Int. Cl.: A23G 1/00, A23G 1/04

(54) **Process for producing chocolate**
Herstellungsverfahren für Schokolade
Procédé de fabrication de chocolat

(30) Priority: 10.04.1996 JP 8832296; 18.02.1997 JP 3388997
(43) Date of publication of application: 15.10.1997
(73) Proprietor: Ajinomoto Co., Inc., Tokyo 104 (JP)
(72) Inventor: Yamazaki, Katsutoshi, c/o Ajinomoto Co., Inc., Kawasaki-ku-Kawasaki-shi, Kanagawa-ken (JP); Soeda, Takahiko, c/o Ajinomoto Co., Inc., Kawasaki-ku-Kawasaki-shi, Kanagawa-ken (JP)
(74) Representative: Strehl Schübel-Hopf & Partner

(56) References cited:
- EP-A- 0 379 606
- WO-A-94/21130
- US-A- 5 330 778
- PATENT ABSTRACTS OF JAPAN vol. 8, no. 156 (C-234), 19 July 1984 & JP 59 059151 A (MOTOKI MASAO), 4 April 1984,
- PATENT ABSTRACTS OF JAPAN vol. 7, no. 268 (C-197), 30 November 1983 & JP 58 149645 A (MOTOKI MASAO), 6 September 1983,
- PATENT ABSTRACTS OF JAPAN vol. 018, no. 471 (C-1245), 2 September 1994 & JP 06 153807 A (AJINOMOTO), 3 June 1994,
- DATABASE WPI Week 9740 Derwent Publications Ltd., London, GB; AN 97-429127 XP002050434 & JP 09 191 820 A (AJINOMOTO) , 29 July 1997

## Description

### Field of the Invention

The present invention relates to a process for producing a chocolate having improved qualities. More specifically, the present invention relates to a process for producing a chocolate having stable qualities which is free from the so-called blooming phenomenon even when it is exposed to high temperatures or stored for a long period of time in a place where the temperature changes greatly.

### Prior Art

When chocolate is exposed to high temperatures in summer or stored under greatly varying temperature conditions, a state in which a white powder is spread on the surface, namely, the so-called blooming phenomenon, occurs, thereby notably decreasing the commercial value.

Generally, chocolate is prepared by mixing a cacao mass, fats and fatty oils such as a cacao butter or the like, cocoa, saccharides, milk powder and the like as required, and subsequently subjecting the mixture to rolling, conching and tempering. The blooming includes the occurrence of a fat bloom based on unstable crystals of fats and fatty oils of the starting material and the occurrence of a sugar bloom caused by recrystallization of a sugar. Especially, the occurrence of the former fat bloom is observed in many cases.

In order to prevent the occurrence of the fat bloom, there have been a variety of proposals so far. Examples thereof are as follows.
(1) Method in which stable crystalline particles of a 2-unsaturated-1,3-di-saturated glyceride composed of an unsaturated fatty acid having 18 or more carbon atoms and a saturated fatty acid having from 20 to 24 carbon atoms are contained in a chocolate, with a view to keeping the original palatability of its own even after it is exposed to a high temperature close to a body temperature for a fixed period of time (Japanese Patent Publication No. 83,680/1995).
(2) Method in which a sucrose fatty acid ester having a HLB value of 19 or more is used as an emulsifying agent in the production of a chocolate (Japanese Patent Publication No. 108,183/1995).
(3) Chocolate in which (a) a fatty acid component in a lauric acid-type hard butter and a sucrose fatty acid ester is myristic acid, and (b) a sucrose fatty acid ester wherein the average substitution ratio of fatty acid to sucrose is between 5 and 7 are contained (Japanese Patent Publication No. 40,880/1995).
(4) Method using fats and fatty oils composed mainly of triglycerides in which the total number of carbon atoms of the 1,3-saturated-2-unsaturated fatty acid residues is between 50 and 56 (Japanese Patent Publication No. 95, 879/1994).
(5) Method in which a fine crystalline core is formed when solidifying a material in the production of a chocolate to well release the solidified product from the mold, or to retain excellent properties of gloss, palatability, mouth feeling and the like [Japanese Laid-Open Patent Application (Kokai) No. 40,750/1986).

As mentioned above, improvements have been made so far chiefly with respect to the fat component including cacao butter which is the main component of a chocolate. However, the resistance to high temperature has not been satisfactory yet, and consequently a person sometimes eats chocolate having a fat bloom. Further, some fatty acids taste bitter and feel rough. Still further, the cacao mass, cacao butter and the like which are main starting materials are natural products and have, therefore, a wide range of qualities. This fact greatly influences the qualities of the product. Thus, the treatment of the fat bloom must be taken into consideration from the standpoint of qualities of the natural starting materials too.

### Problems To Be Solved by the Invention

It is an object of the present invention to provide a process for producing a chocolate which has stable qualities without causing a fat bloom even when it is exposed to high temperatures or stored for a long period of time in a place where the temperature greatly changes.

### Means Taken For Solving the Problems

The present inventors have conducted various investigations to achieve the above-mentioned object, and have consequently found that when a chocolate dough is reacted with a transglutaminase, (1) the fat meltability during heating is suppressed, thereby keeping a shape retention, and (2) the thus-formed chocolate retains a fixed shape without being melted even under high temperature conditions in summer and is free from the occurrence of the fat bloom. These findings have led to the completion of the present invention.

That is, the present invention relates to a process for producing a chocolate having stable qualities, characterized in that in the step of kneading the starting materials of the chocolate, namely, a cacao mass, fats and fatty oils such as cacao butter or the like, saccharides, milk powder and the like to form a chocolate dough, the starting materials are reacted with a transglutaminase.

### Detailed description of embodiments of the invention

The present invention is described in detail below.

The transglutaminase which is used in the present invention is an enzyme which catalyzes the acyl transfer reaction of a γ-carboxyamide group of a glutamine residue in a peptide chain of a protein. When this transglutaminase acts on an ε-amino group of a lysine residue in a protein as an acyl receptor, an ε-(γ-Glu)Lys linkage is formed in the protein intramolecularly or intermolecularly. The properties of this enzyme are disclosed in detail in, for example, Japanese Laid-Open Patent Application (Kokai) No. 27,471/1989.

In the present invention, it is considered that the crosslink-polymerization of the protein in the cacao mass which is a main starting material is accelerated by the enzymatic activity of the transglutaminase, whereby the resulting chocolate is provided with desired properties, and it exhibits heat resistance so as not to allow occurrence of a fat bloom even upon exposure to high temperatures.

The transglutaminase includes a calcium-independent one and a calcium-dependent one, both of which can be used in the present invention. The former enzyme includes one derived from microorganisms [for example, Japanese Laid-Open Patent Application (Kokai) No. 27,471/1989]. The latter enzyme includes one derived from guinea pig liver (Japanese Patent Publication No. 50,382/1989), one derived from blood (for example, factor XIII) and one derived from fish [for example, Journal of Japan Fisheries Academy, by Seki Nobuo et al., vol. 56, pp. 125 - 132 (1990)]. Further, transglutaminase which is produced through gene recombination [Japanese Laid-Open Patent Application (Kokai) Nos. 300,889/1989 and 199,883/1993, and WO 93/15234) is also available. Thus, the origin of this enzyme and the process for producing the same are not limited in the present invention. However, in view of both the function in the use of food and the economics, the calcium-independent transglutaminase is preferable.

The amount of the transglutaminase is between 0.05 and 50 units (U), preferably between 0.1 and 20 U per gram of the protein materials of the cacao mass or the like as a main starting material. When the amount is less than 0.05 U, the product is substantially not different from a product formed without using the enzyme, and heat resistance is not imparted thereto. When it exceeds 50 U, indeed heat resistance is imparted to the product, but the product becomes too hard, decreasing the mouth-meltability.

The activity unit of the transglutaminase referred to in the present invention is measured and defined as follows. That is, benzyloxycarbonyl-L-glutaminylglycine and hydroxylamine are reacted as substrates, and hydroxamic acid obtained is transformed into an iron complex in the presence of trichloroacetic acid. Then, the absorbance thereof is measured at 525 nm. In this manner, a calibration curve is prepared from the amount of hydroxamic acid, and the amount of the enzyme to form 1 µmol of hydroxamate during 1 minute in view of the calibration curve is defined as 1 unit which is the activity unit of a transglutaminase [refer to Japanese Laid-Open Patent Application (Kokai) No. 27,471/1969].

With respect to the reaction conditions of the transglutaminase, the transglutaminase may be retained at a temperature of from 10 to 65°C for from 20 to 120 minutes, preferably at a temperature of from 20 to 40°C for from 30 to 60 minutes. Accordingly, when the conditions in the step of kneading starting materials such as a cacao mass and the like or the conditions in the conching step are consistent with, or included in, the reaction conditions of this enzyme, it is naturally unnecessary to set the reaction conditions of this enzyme.

It has been found that when the chocolate dough contains a small amount of a protein and/or a protein partial hydrolyzate in the reaction with the transglutaminase, the above-mentioned crosslink-polymerization of the protein is expedited, with the result that the overall texture is stabilized which is effective for preventing the blooming.

Examples of the protein to be used in the present invention include wheat protein, milk protein, soybean protein, gelatin and whey protein. Of these, milk protein is preferable.

Examples of the milk protein include not only casein but also casein salts such as sodium caseinate, calcium caseinate and potassium caseinate, whole milk powder and skim milk powder.

The protein partial hydrolyzate includes a substance obtained upon using wheat protein, milk protein, soybean protein, gelatin or whey protein as a starting material.

The wheat protein partial hydrolyzate may be obtained by partially hydrolyzing the wheat protein with an enzyme, an acid or an alkali. It is not particularly limited, but a product having a deamidation ratio of from 5 to 70 and an average molecular weight of from 4,000 to 50,000 is commonly used. The amidation ratio is an index indicating the degree of formation of an α-amino acid which results by hydrolysis through the catalytic activity of an acid, an alkali or an enzyme.

The milk protein partial hydrolyzate may be obtained by partially hydrolyzing the above-mentioned milk protein, namely, casein and its salts, whole milk powder or skim milk powder with an enzyme, an acid or an alkali. It is not particularly limited, but a product having a deamidation ratio of from 10 to 40 and an average molecular weight of from 400 to 40,000 is commonly used.

Besides the above-mentioned wheat protein partial hydrolyzate and milk protein partial hydrolyzate, a lysine peptide which has been put into markets can also be used as a protein partial hydrolyzate. In the present invention, a lysine peptide composed of a single amino acid(i.e. Lysine) is also included in the protein partial hydrolyzate. The lysine peptide is not particularly limited, but one having an average molecular weight of from 600 to 40,000 is generally used.

The amount of the protein and/or the protein partial hydrolyzate to be added is usually between 0.001 and 5.0 g, preferably between 0.01 and 1.0 g per gram of the protein of the cacao mass or the like as the main starting material. When the amount is less than 0.001 g, the chocolate is slightly hard on the palate when it is eaten, and the mouth-meltability is slightly bad. Meanwhile, when it exceeds 5.0 g, it is brittle and not viscous, and is quickly melted in the mouth. Thus, it is too soft on the palate. Accordingly, the desired object cannot be achieved sufficiently in either case.

The chocolate aimed at by the present invention is of any type if the cacao mass is used as a main starting material. This invention is preferably applied to, for example, not only a chocolate having the cacao content of from 21 to 35% but also a chocolate product having the cacao content of from 7 to 15%. Further, the chocolate obtained by the present invention may of course be applied to cake coating, a material or a topping material of a cake.

The chocolate is normally produced by mixing main components, namely, cacao mass, fats and fatty oils such as cacao butter or the like, saccharides and a milk powder with additives such as lecithin which is a dough-preparing agent and the like, subsequently subjecting the mixture to rolling and conching, further tempering or not tempering the chocolate dough, finally cooling and solidifying the thus-treated product.

The chocolate dough used in the present invention may contain or be free from lecithin.

The cacao butter may be used either alone or in combination with other vegetable fats and oils such as a mowrah fat, an illipe fat, a shea fat, a sal fat, allanbrakkia fat, a mango fat, cochmu fat and the like.

Further, since cacao butter is costly and is not stably supplied, a hard butter has been used instead of the cacao butter according to the use purpose. Hard butter is what we call a cacao butter replacer. Natural products (natural fats and fatty oils) as well as artificial ones obtained by inter esterification and the like can be used as hard butter. Various types of hard butters being low priced have been used, according to various types of chocolate products. Such hard butter is classified into a tempering-type hard butter and a non-tempering-type hard butter. As the tempering-type hard butter, a non-laurin-type hard butter containing a trans-form unsaturated fatty acid as a main component is used. As the non-tempering-type hard butter, a laurin-type hard butter is used. For the purpose of this invention, chocolate dough containing such a hard butter is naturally available.

There are various types of the tempering step. Usually, the tempering step includes at least one step of forcibly cooling the molten oily composition and at least one reheating step. In recent years, this tempering step tends to be omitted because the tempering procedure is generally not simple. Thus, the tempering step can be omitted by using a hard butter having a high content of elaidic acid, a hard butter in which fatty acids made by inter esterification are randomly arranged or a laurin-type hard butter.

The chocolate dough in the present invention may contain an emulsifying agent according to the use purpose. Examples of the emulsifying agent include a sorbitan fatty acid ester, a polyglycerol fatty acid ester, a glycerol fatty acid ester and lecithin and so forth. When a viscosity reducing agent is used according to the use purpose, it is advisable to employ a sucrose fatty acid ester. Preferable examples of the unsaturated fatty acid components include oleic acid, palmitoleic acid, linolic acid, linolenic acid, elaidic acid, erucic acid and arachidonic acid.

In the present invention, the chocolate can be produced by an ordinary process for the production of chocolate except for the step of adding the transglutaminase to the chocolate dough formed to cause this enzyme to act thereon. Also, an ordinary starting material for producing chocolate can be utilized. It is possible to produce the chocolate using ordinary devices for producing a chocolate, such as a grinder, a mixer, a refiner and the like.

The present invention includes (1) a process in which (a) a cacao mass or (b) a mixture of a cacao mass and a protein and/or a protein partial hydrolyzate is directly reacted with a transglutaminase, and then fats and fatty oils such as cacao butter or the like, sugar powder, an emulsifying agent such as lecithin or the like, and other additives are added to the transglutaminase reaction mixture; and (2) a process in which (a) a cacao mass or (b) a mixture of a cacao mass and a protein and/or a protein partial hydrolyzate with fats and fatty oils such as cacao butter or the like, sugar powder, an emulsifying agent such as lecithin or the like and other additives is reacted with a transglutaminase in a kneading step. Both of these processes can be used in the present invention.

Of these processes, the process (2) is described in Examples. The process (1) is simply explained below.

A transglutaminase is added to a cacao mass or a mixture of a cacao mass and a protein and/or a protein partial hydrolyzate, and the mixture is reacted at from 10 to 65°C for from 20 to 120 minutes. Subsequently, fats and fatty oils such as cacao butter or the like, sugar powder, an emulsifying agent and the like are added thereto. The resulting mixture is ground, and then kneaded at from 20 to 35°C for from 10 to 120 minutes, preferably for from 30 to 60 minutes. After the enzymatic reaction is completed in this kneading step, the resulting product is subjected to rolling, conching and then tempering in a usual manner. The thus-treated substance is molded, cooled, released, aged and packed to form a final product.

As mentioned above, the present invention relates to a process for producing a chocolate having stable qualities, which process is effective for preventing the occurrence of blooming. The chocolate of the present invention is also used in various unbaked cakes, and baked cakes such as cookies and the like. Further, the chocolate of the present invention is used as a filling in a sandwich. Still further, it can also be used in a cold cake and as a paste. Thus, the chocolate of the present invention is widely available to several kinds of usage.

### Examples

The present invention is illustrated more specifically by referring to the following Examples. However, the present invention is not limited thereto. In the following Examples, a calcium-independent transglutaminase derived from Streptoverticillium mubaraense was used as a transglutaminase.

### Example 1

A transglutaminase in an amount of from 0.05 to 50 U per gram of the protein of a cacao mass as shown in Table 1 was added to a chocolate dough obtained by fully kneading 40 parts by weight of cacao mass, 10 parts by weight of cacao butter, 50 parts of sugar powder and 0.5 parts of lecithin. The mixture was further kneaded at 30°C for 60 minutes. Subsequently, the resulting mixture was subjected to rolling, conching and tempering in a usual manner to form 500 g of each chocolate. The thus-obtained chocolates were stored at 20°C. After 3 weeks, the degree of occurrence of a fat bloom, and the mouth-meltability were evaluated. A control product was produced in the above-mentioned manner except that no transglutaminase was added. As a result, all of the products 1 to 5 of the present invention were more smoothly melted within the mouth than the control product, and the feeling of all inventive products during the passage through the throat was as good as that of the control product. In the control product, the occurrence of fat bloom was observed, whereas no occurrence of fat bloom was observed in all products of the present invention.

**Table 1**

| | Amount of transglutaminase (U/g•protein of cacao mass) | Degree of occurrence of fatbloom After storage at 20°C for 3 weeks | Comments |
|---|---|---|---|
| Invention Product 1 | 0.05 | - | The chocolate was melted in the mouth more smoothly, and the feeling upon passage through the throat was as good as that of the control product. Thus, the good results were provided. |
| Invention Product 2 | 1 | - | |
| Invention Product 3 | 5 | - | |
| Invention Product 4 | 10 | - | |
| Invention Product 5 | 50 | - | |
| Control Product | 0 | +++ | |

**Table 2**

| Score | Fat bloom |
|---|---|
| - | no occurrence |
| ± | slight occurrence |
| + | common occurrence |
| ++ | much occurrence |
| +++ | heavy occurrence |
| ++++ | occurrence on the overall surface |

### Example 2

Chocolates were produced under the same conditions as in Example 1 except for using a material containing a transglutaminase (1 U/g·protein of the cacao mass) [Inventive product 1], a material containing a transglutaminase (1 U/g·protein of the cacao mass) and a glutamine peptide (made by Kanpina Milk Uni Japan Co., Inc., average molecular weight 7,000, 1.0 g/g·protein of the cacao mass) which is a partial hydrolyzate of wheat protein [Inventive product 2], and a material containing the same amount (1 U/g·protein of the cacao mass) of a transglutaminase and a milk protein partial hydrolyzate ("MA-Z", made by Morinaga Milk Industry Co., Ltd., average molecular weight 10,000, 1.0 g/g·protein of the cacao mass) [Inventive product 3]. Each of these chocolates was stored at 20°C for 3 weeks. A control product was produced in exactly the same manner as the inventive products except that a transglutaminase and a protein partial hydrolyzate were not added. The inventive products were compared with the control product. As a result, all of the inventive products (1),(2) and (3) were melted more smoothly within the mouth in comparison with the control product. The feeling of all inventive products upon passage through the throat was as good as that of the control product, and no occurrence of fat bloom was observed in all inventive products. By contrast, the control product had poor mouth-meltability, and the occurrence of fat bloom was considerably observed therein.

### Example 3

A chocolate was produced under the same conditions as in Example 1 except for using a material containing a transglutaminase (1 U/g·protein of the cacao mass) and sodium caseinate (1 g/g·protein of the cacao mass). This chocolate was stored at 20°C for 3 weeks.

A control product was produced in exactly the same manner as the product of the invention except that transglutaminase and sodium caseinate were not added.

The inventive product was compared with the control product. As a result, it was found that in comparison with the control product, the inventive product had good mouth-meltability and felt smooth, and no occurrence of fat bloom was observed therein.

### Effects of the Invention

In accordance with the present invention, cacao mass used as a main starting material of chocolate and, as required, a protein and/or a protein partial hydrolyzate to be contained in the chocolate dough are reacted with a transglutaminase, whereby an ε-(γ-Glu)Lys linkage is formed in the protein intramolecularly or intermolecularly. Consequently, a chocolate can be produced in which the occurrence of blooming is prevented even when it is exposed to high temperatures or stored for a long period of time in a place where the temperature changes greatly, and which retains a smooth feeling and exhibits an excellent mouth-meltability. Further, the chocolate of the present invention feels smooth and is smoothly melted within the mouth even when it is used as a coating of an unbaked cake or the like, or as a chocolate topping material of a baked cake.

## Claims

1. A process for producing chocolate, **characterized in that** in the step of kneading the starting materials of the chocolate, the starting materials are reacted with a transglutaminase.

2. A process for producing chocolate, **characterized in that** the cacao mass which is a main starting material is reacted in advance with a transglutaminase and then subjected to the kneading step.

3. The process of claim 1 or 2, wherein a protein and/or a protein partial hydrolyzate is contained in the starting materials.

## Patentansprüche

1. Verfahren zur Herstellung von Schokolade, **dadurch gekennzeichnet, daß** in der Stufe des Knetens der Ausgangsmaterialien der Schokolade die Ausgangsmaterialien mit Transglutaminase umgesetzt werden.

2. Verfahren zur Herstellung von Schokolade, **dadurch gekennzeichnet, daß** die Kakaomasse, die ein Hauptausgangsmaterial ist, vorher mit einer Transglutaminase umgesetzt wird und dann der Knetstufe unterworfen wird.

3. Verfahren nach Anspruch 1 oder 2, wobei ein Protein und/oder ein Proteinteilhydrolysat in den Ausgangsmaterialien enthalten ist.

## Revendications

1. Procédé de fabrication de chocolat, **caractérisé en ce que** dans l'étape de malaxage des matières premières du chocolat, on fait réagir les matières premières avec une transglutaminase.

2. Procédé de fabrication de chocolat, **caractérisé en ce que** la masse de cacao, qui est une matière première principale, réagit par avance avec une transglutaminase et ensuite est soumise à l'étape de malaxage.

3. Procédé selon la revendication 1 ou 2, dans lequel une protéine et/ou un hydrolysat partiel de protéine est contenu dans les matières premières.
